# FASCICULE DE BREVET EUROPEEN

(11) **EP 1 004 379 B1**
(45) Date de publication et mention de la délivrance du brevet: **11.06.2003**
(21) Numéro de dépôt: 98811167.0
(22) Date de dépôt: 25.11.1998
(51) Int. Cl.: B23B 31/20

(54) **Dispositif de serrage d'une pièce ou d'une barre de matériau à usiner**
Spannvorrichtung für einen Werkstück oder eine Stange
Clamping device for a piece or a bar

(43) Date de publication de la demande: 31.05.2000
(73) Titulaire: Tornos SA, 2740 Moutier (CH)
(72) Inventeur: Schuettel, Patrick, 2762 Roches (CH)
(74) Mandataire: BOVARD AG - Patentanwälte

(56) Documents cités:
- EP-A- 0 213 075
- DE-A- 4 442 395
- FR-A- 2 236 590
- GB-A- 1 401 275
- US-A- 2 782 044

## Description

La présente invention concerne **une méthode de** serrage telle que decrite dans le préambule de la revendication 1. Une telle méthode est connue du document EP-A- 0 213 075.

Les machines-outils modernes de haute productivité travaillant à vitesse de broche élevée et avec des outils à forte capacité d'enlèvement de copeaux, le problème du maintien de la pièce ou de la barre dans la broche, respectivement du serrage de la pince montée dans la broche, devient primordial.

Les dispositifs de serrage purement mécaniques connus, généralement actionnés par une came en forme de cloche ne peuvent plus être utilisés sur des machines telles que mentionnées plus haut vu que l'effort de serrage doit être transmis par des moyens mécaniques, par exemple des roulements à billes.

Les dispositifs de serrage purement pneumatiques connus n'offrent pas une capacité de serrage suffisante, à moins d'être très volumineux. D'autre part, une disparition de la pression provoque généralement un desserrage de la pince, ce qui peut être dangereux, tant pour la machine que pour l'utilisateur.

Pour éviter le desserrage de la pince en cas de disparition de la pression, il est connu d'effectuer le serrage au moyen de la force des moyens ressort et pour le desserrage d'employer des moyens pneumatiques. Afin d'atteindre une capacité de serrage suffisante il est nécessaire d'employer des moyens ressort très forts, ce qui nécessite des moyens pneumatiques correspondants pour le desserrage.

Le brevet EP 0 213 075 décrit un tel dispositif de serrage avec un ressort pour atteindre la force de desserrage. Pour atteindre une force de desserrage suffisante, le dispositif est équipé d'un amplificateur de force hydraulique. Vu que le diamètre du piston primaire pneumatique est relativement étendu, le moment d'inertie du dispositif est assez important, ce qui est indésirable dans une machine où la broche est souvent arrêtée et accélérée. De plus, un des inconvénients de ce dispositif est que des bulles d'air dans le liquide hydraulique peuvent rendre impossible le fait d'enlever la pièce ou la barre à usiner.

Un premier but de l'invention est donc de proposer un dispositif de serrage ne rencontrant pas les inconvénients des dispositifs connus de l'art antérieur, c'est-à-dire offrant une force de serrage importante, ne comportant pas de circuit hydraulique et étant apte à conserver la pièce à usiner serrée dans la pince en cas de disparition de la pression.

Un deuxième but de l'invention est de proposer un dispositif de serrage d'encombrement minimum, ayant donc une faible inertie et permettant d'accepter des barres à usiner de diamètre important.

Un troisième but de l'invention est de proposer un dispositif de serrage, dont la force de serrage est ajustable, par exemple pour pouvoir l'adapter au matériau de la pièce ou la barre à usiner.

Un quatrième but de l'invention est de proposer un dispositif de serrage, dont la force nécessaire pour le desserrage est plus faible que dans les dispositifs selon l'état de la technique, où toute la force de serrage n'est effectuée que par un ressort.

Ces différents buts sont obtenus par un dispositif de serrage possédant les caractéristiques mentionnées dans la revendication indépendante 1. Des détails d'exécution, des variantes ou autres formes d'exécution sont décrites dans les revendications dépendantes.

Un but d'une forme d'exécution du dispositif selon l'invention est de proposer un dispositif de serrage dont la construction peut être adaptée à l'effort de serrage désiré ainsi qu'à la pression d'air disponible pour la machine. Ce but est obtenu par une forme d'exécution selon la revendication indépendante 4.

Un autre but de l'invention est de proposer une broche de machine-outil équipée d'un dispositif de serrage comme ci-dessus. Ce but est obtenu par une broche selon la revendication 15.

Encore un autre but est de proposer une machine-outil, notamment un tour automatique ou une décolleteuse équipée d'au moins une broche munie d'un dispositif comme ci-dessus. Ce but est obtenu par une machine selon la revendication 17.

La description qui suit décrit en détail une forme d'exécution préférentielle d'une broche munie d'un dispositif de serrage selon l'invention, étant à lire en regard du dessin annexé comportant les figures où :
La figure 1 montre une coupe longitudinale d'une broche de machine-outil équipée d'un dispositif de serrage selon l'invention, la figure montrant essentiellement la manière dont sont assemblées les deux figures suivantes,
la figure 2 montre la portion avant de la broche de la figure 1 à plus grande échelle, et
la figure 3 montre la portion arrière de la même broche à plus grande échelle.

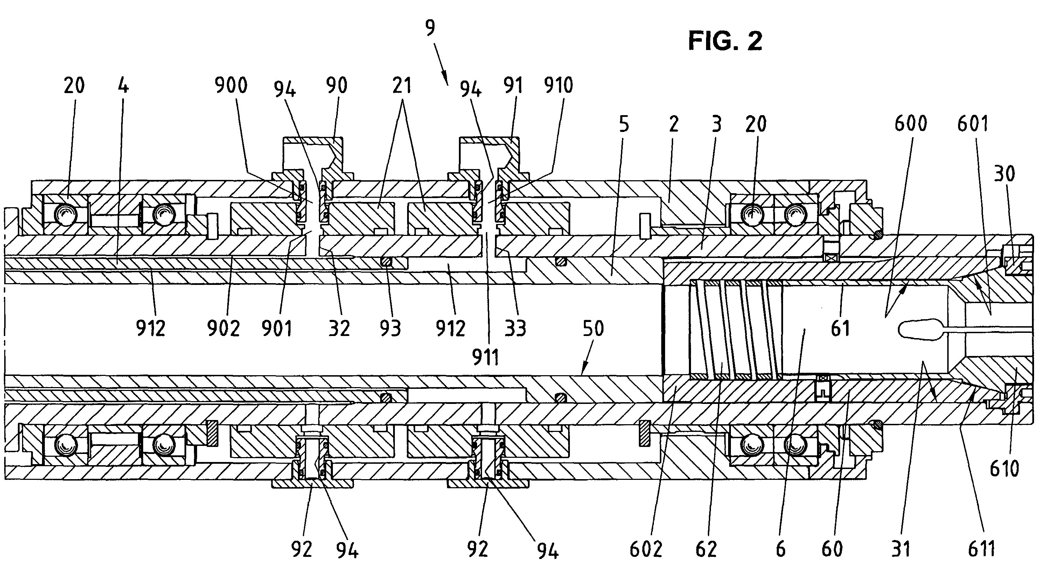

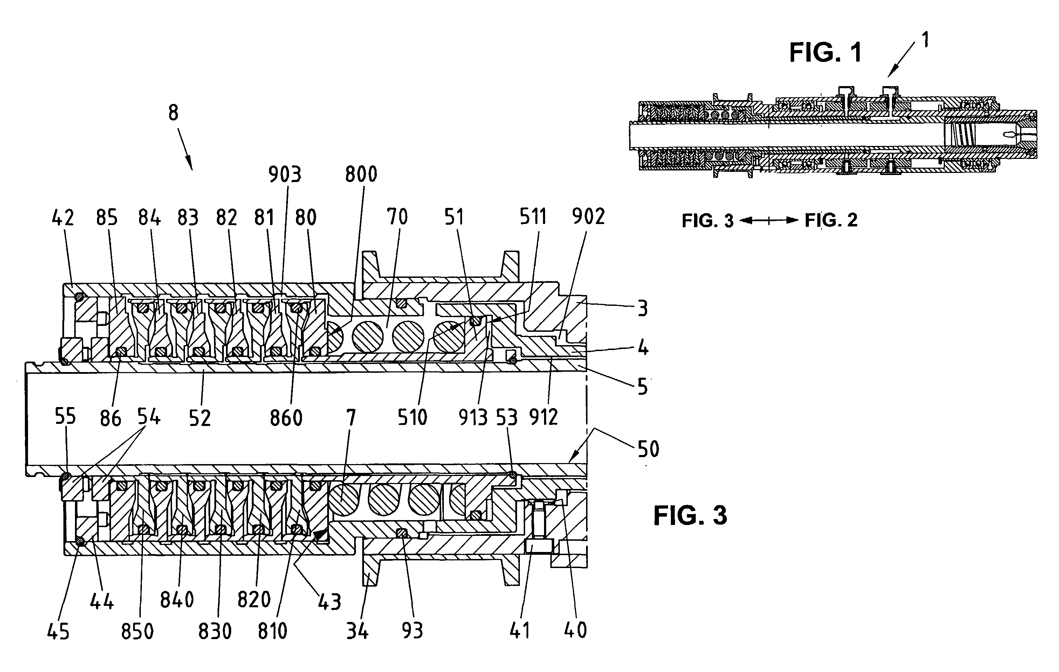

La broche 1 représentée sur la figure 1 est particulièrement destinée à une machine-outil, notamment une décolleteuse, apte à usiner une barre introduite par l'arrière dans un canal central longitudinal traversant toute la longueur de la broche. Elle est de forme essentiellement cylindrique, sa portion avant étant représentée en coupe à la figure 2 alors que sa portion arrière est plus particulièrement visible en coupe sur la figure 3.

En se reportant tout d'abord à la figure 2, on voit que la broche 1 (figure 1) comprend un support de broche 2, qui est une partie fixe faisant partie ou pouvant être fixée au corps de la machine. Un corps de broche 3 est disposé coaxialement au support de broche 2, étant supporté par deux jeux de roulements à billes 20 aptes à permettre la rotation du corps de broche 3 relativement au support de broche 2 autour de l'axe longitudinal de la broche. Les roulements à billes 20 ainsi que les moyens de fixation du corps de broche 3 ne permettent aucun déplacement axial dudit corps de broche relativement au support de broche 2. Le corps de broche 3 comprend au moins deux trous radiaux traversants 32, 33 disposés sur deux périmètres distincts du corps de broche 3, l'utilité de ces trous 32, 33 étant décrite plus loin; de préférence on a plusieurs trous radiaux 32, 33 disposés sur deux périmètres distincts. Afin d'entraîner la broche 1 en rotation pour l'usinage de la pièce ou de la barre qu'elle porte, le corps de broche 3 est muni de moyens d'entraînement, par exemple une poulie 34, apte à recevoir une courroie crantée (voir figure 3).

Un tube de réglage 4 est disposé coaxialement immédiatement sous le corps de broche 3, étant fixé audit corps de broche par un filetage 40 visible sur la figure 3. En vissant plus ou moins le tube de réglage 4 sous le corps de broche 3, on a un ajustage longitudinal de position dudit tube de réglage, et par conséquent de position du tube de poussée relatif au corps extérieur 60, permettant un ajustage du diamètre initial de l'ouverture de la pince de serrage 6. Afin d'assurer la position du tube de réglage 4 relativement au corps de broche 3, une vis 41 est disposée sur le pourtour du corps de broche 3 afin de fixer le tube de réglage 4 selon une position axiale de réglage déterminée. On verra plus bas qu'un conduit d'air comprimé 902 doit suivre l'interface entre le corps de broche 3 et le tube de réglage 4; à cet effet le filetage 40 est constitué de préférence de plusieurs segments circulaires filetés successifs laissant au moins un passage pour le conduit d'air 902.

Un tube de poussée 5 est disposé coaxialement immédiatement sous le tube de réglage 4, étant apte à se déplacer axialement relativement audit tube de réglage. Le tube de poussée 5 comprend un percement longitudinal 50 apte à recevoir une barre à usiner par l'arrière et à la guider vers l'avant de la broche.

L'extrémité avant du corps de broche 3, visible sur la figure 2, porte une couronne de maintien 30 d'une pince de serrage conventionnelle 6. La pince de serrage 6 est composée d'un corps extérieur cylindrique tubulaire 60, apte à coulisser longitudinalement à l'intérieur d'un alésage intérieur 31 de la portion d'extrémité du corps de broche 3 immédiatement en arrière de la couronne 30, d'un corps intérieur cylindrique tubulaire 61 apte à coulisser longitudinalement à l'intérieur d'un alésage intérieur 600 du corps extérieur 60. Le corps intérieur 61 porte, sur son extrémité tournée vers l'avant de la broche, une pluralité d'éléments de serrage 610, séparés par des fentes longitudinales et munis chacun d'une portion de surface périphérique externe 611 inclinée, coopérant avec une surface périphérique interne 601 du corps extérieur 60.

Vu que les éléments de serrage 610 viennent en butée contre la couronne 30, aucun mouvement axial du corps intérieur 61 n'est possible. Il s'ensuit qu'un déplacement vers la droite relativement à la figure du corps extérieur 60 relativement au corps intérieur 61 provoque donc un serrage des éléments de serrage 610 autour de la barre ou de la pièce à usiner maintenue entre ces éléments de serrage, alors qu'un déplacement vers la gauche du corps extérieur 60 provoque un desserrage. Une telle disposition sans déplacement axial possible des éléments de serrage 610 permet un usinage de grande précision vu qu'aucun mouvement axial n'est imposé à la pièce ou à la barre à usiner lors du serrage ou du desserrage de la pince 6. La pince de serrage 6 comprend en outre un élément à ressort 62, par exemple un ressort à boudin, disposé entre une face arrière du corps intérieur 61 et un épaulement 602 aménagé sur la face arrière du corps extérieur 60. De par la pression exercée par le ressort 62, le corps extérieur 60 tend à être repoussé vers l'arrière, tendant donc à desserrer la pince 6.

On voit notamment sur la figure 3 que la portion arrière du tube de réglage 4 est évasée afin de laisser une place disponible pour un logement 70 d'un élément à ressort 7 ainsi que pour un dispositif de serrage pneumatique 8 qui sera décrit plus bas.

Le logement 70 est limité axialement du côté arrière par une face 800 en forme de couronne circulaire d'une paroi 80 fixée au tube de réglage 4 et du côté avant par une face 510 en forme de couronne circulaire d'un épaulement 51 aménagé sur le tube de poussée 5. Vu que, après que sa position axiale ait été ajustée comme indiqué plus haut, le tube de réglage 4 est immobile axialement, le ressort 7 en appui sur la face 800 tend à pousser vers l'avant la face 510 de l'épaulement 51 et par conséquent le tube de poussée 5 qui lui est fixé. L'extrémité avant du tube de poussée 5 venant en appui contre une face arrière du corps extérieur 60 de la pince de serrage 6, le ressort 7 tend donc à serrer la pince 6.

Ainsi, à l'état de repos du dispositif, la pince 6 est soumise d'une part à l'effet du ressort 62 qui tend à l'ouvrir ou la desserrer et d'autre part à l'effet du ressort 7 qui tend à la fermer ou la serrer. La constante du ressort 7 étant choisie plus élevée que celle du ressort 62, la pince 6 se ferme à l'état de repos. On voit sur la figure 2 que l'extrémité du tube de poussée 5 vient seulement en appui sur la face arrière du corps extérieur 60 afin de la serrer. Il s'ensuit qu'en cas de retrait du tube de poussée, le ressort 62 permet alors l'ouverture de la pince 6.

Le dispositif de serrage pneumatique 8 est visible sur la figure 3. A cet endroit, il est à mentionner qu'à la partie supérieure de la figure 3, certaines lignes de dessin seront supprimées, afin de rendre le passage de l'air comprimé plus visible. La position de chaque élément spécifique est cependant exactement la même dans les parties supérieure et inférieure de la figure 3. Le dispositif de serrage pneumatique 8 est constitué d'une pluralité de parois externes 80, 81, 82, 83, 84 et 85 en forme de couronnes circulaires successives, qui sont tenues ensemble par leurs faces d'appui extérieures (cf figure 3) entre l'épaule 43 du tube de réglage 4 et l'anneau externe 44. L'anneau externe est fixé par l'anneau élastique 45 à l'extrémité arrière 42 du tube de réglage 4. Les parois externes présentent à plusieurs endroits de leurs bordures, des entailles afin de permettre le passage de l'air comprimé (cf partie supérieure de la figure 3). De manière similaire, une autre pluralité de parois internes 810, 820, 830, 840 et 850 en forme de couronnes circulaires successives sont fixées à l'extrémité arrière 52 du tube de poussée 5. Les parois internes sont tenues ensemble par leurs faces d'appui intérieures (cf partie inférieure de la figure 3) et sont fixées sur le tube de poussée 5 d'une part à l'aide de l'anneau élastique 53 et de la pièce 51 et d'autre part à l'aide d'un jeu d'anneaux internes 54 et de l'anneau élastique 55. On trouve également aux parois internes des passages radiaux et axiaux pour l'air comprimé, qui sont visibles dans la partie supérieure de la figure 3. Chacune des parois internes 810, ... 850 étant intercalée entre deux parois externes successives 80, ... 85. La largeur de l'espace libre entre deux parois externes successives 80, ... 85 est plus grande que l'épaisseur d'une paroi interne 810, ... 850 intercalée dans ledit espace, en conséquence chaque paroi interne est entourée d'un premier volume limité par la paroi externe précédente, et d'un deuxième volume limité par la paroi externe suivante. Les parois externes 80, ... 85 étant fixées au tube de réglage 4, non mobile axialement, alors que les parois internes 810, ... 850 sont fixées au tube de poussée 5, mobile axialement, les grandeurs relatives de ces deux volumes peuvent varier selon le déplacement du tube de poussée 5. Des joints toriques 86, 860 sont disposés sur les arêtes intérieures des parois externes 80, ... 85, respectivement sur les arêtes extérieures des parois internes 810, ... 850, afin d'étanchéifier chacun desdits premiers volumes relativement auxdits deuxièmes volumes.

Le dispositif de serrage pneumatique 8 est complété d'un dispositif de mise en pression 9 (voir figure 2) comprenant notamment un premier embout d'entrée 90 d'une première pression de serrage et un deuxième embout d'entrée 91 d'une deuxième pression de desserrage.

Le premier embout 90 conduit l'air sous pression à travers une canalisation 900, traversant successivement le support de broche 2 ainsi qu'un coussinet d'étanchéité 21, dont la surface intérieure est en contact glissant sur la surface cylindrique extérieure d'une portion du corps de broche 3. Le coussinet 21 comprend sur sa surface intérieure en contact avec le corps de broche 3 une chambre de distribution 901 apte à alimenter en air sous pression le ou les trous 32 disposés radialement et régulièrement espacés sur un périmètre du corps de broche 3 disposé immédiatement en regard de la chambre de distribution 901. Le ou les trous 32 débouchent sur un conduit d'air 902 constitué par un espace aménagé entre le diamètre intérieur du corps de broche 3 et le diamètre extérieur du tube de réglage 4. Sur la figure 3 on voit que ce conduit 902 se poursuit vers l'arrière pour déboucher dans le logement 70 du ressort 7. Un autre conduit 903 ressort du logement 70 pour alimenter chacune des chambres de pression de serrage limitée par les parois 81 et 810, 82 et 820, 83 et 830, 84 et 840, 85 et 850.

De manière absolument similaire, le deuxième embout 91 conduit l'air sous pression à travers une canalisation 910, traversant successivement le support de broche 2 ainsi qu'un autre coussinet d'étanchéité 21 sous lequel une autre chambre de distribution 911 alimente en air sous pression un autre ou d'autres trous 33 disposés de la même manière que le ou les trous 32. Le ou les trous 33 débouchent sur un conduit 912 constitué essentiellement par un espace aménagé entre le diamètre intérieur du tube de réglage 4 et le diamètre extérieur du tube de poussée 5. Sur la figure 3 on voit que ce conduit 912 se poursuit vers l'arrière pour déboucher dans une première chambre 913 disposée sur la face avant 511, opposée à la face 510 du logement 70, de l'épaulement 51, puis se poursuit toujours vers l'arrière pour alimenter chacune des chambres de pression de desserrage limitée par les parois 80 et 810, 81 et 820, 82 et 830, 83 et 840, 84 et 850.

Ainsi, en alimentant le premier embout 90 par une première pression d'air, on introduit donc cette pression d'air dans le logement 70, cette pression collaborant alors avec le ressort 7 pour repousser vers l'avant la face 510 de l'épaulement 51, alors que dans les chambres de pression de serrage limitées par les parois 81 et 810, 82 et 820, 83 et 830, 84 et 840, 85 et 850 elle tend à pousser vers l'avant les parois 810, 820, 830, 840 et 850, qui, de même que l'épaulement 51, sont fixées comme indiqué plus haut au tube de poussée 5. Cette première pression d'air introduite par l'embout 90 tend donc à serrer la pince 6.

Lorsque cette première pression est nulle et qu'on alimente le deuxième embout 91 par une deuxième pression d'air, on introduit donc cette pression dans la chambre 913 où elle s'oppose à l'effet du ressort 7, de même que dans les chambres de pression de desserrage limitées par les parois 80 et 810, 81 et 820, 82 et 830, 83 et 840, 84 et 850 où elle est appliquée sur les parois 810, 820, 830, 840 et 850 pour les repousser vers l'arrière. Ainsi, l'introduction d'une pression d'air par l'embout 91 tend à desserrer la pince 6.

L'effort de serrage exercé par la pince 6, proportionnel au déplacement longitudinal du corps intérieur 61, est donc fourni par la somme des forces exercées par le ressort 7, celle exercée par la première pression d'air sur la face 510 du logement 70, celles exercées par la même pression d'air sur les parois 810, 820, 830, 840 et 850, de laquelle somme, la force en sens contraire exercée par le ressort 62 est à déduire. Afin de desserrer la pince 6, on a donc une force constituée de la somme des forces exercées par la deuxième pression d'air s'exerçant en sens contraire sur les parois 511 ainsi que 810, 820, 830, 840 et 850 ajoutée à la force exercée par le ressort 62, somme qui doit s'opposer à la force exercée par le ressort 7. La force de serrage de la pince 6, obtenue comme décrit, peut être ajustée, par variation de la première pression d'air, même lorsque la broche est en rotation.

On voit donc qu'en cas de disparition de la première pression et de la deuxième pression, la force de serrage sur la pince 6 correspond à la force exercée par le ressort 7 diminuée de celle exercée par le ressort 62. Cette caractéristique est importante puisqu'elle permet, pour des raisons de sécurité, qu'en cas de disparition de l'alimentation en air sous pression, la pièce ou la barre à usiner reste serrée dans la pince 6.

Vu la différence des forces exercées par les ressorts 7 et 62, et vu que dans l'exemple considéré ici les surfaces des parois 510 et 511 de même que les deux surfaces opposées des parois 810, 820, 830, 840 et 850 sont approximativement de mêmes valeurs, la deuxième pression d'air servant au desserrage de la pince 6 doit être plus élevée que la première pression d'air servant au serrage de la pince 6.

On constate donc que le constructeur ou utilisateur dispose d'un certain nombre de paramètres sur lesquels il peut jouer afin d'obtenir la force de serrage souhaitée de la pince 6, ces paramètres étant : la constante du ressort 7, la constante du ressort 62, la première pression d'air, la deuxième pression d'air, la surface active des parois 510 et 511, les deux surfaces actives des parois 810, ... 850 ainsi que le nombre de chambres de pression situées de part et d'autre desdites parois 810, ... 850. La forme d'exécution décrite ci-dessus comprend cinq parois mobiles 810, ... 850 avec cinq chambres de pression agissant pour le serrage et cinq chambres de pression agissant pour le desserrage. Dans le cas où la pression d'air à disposition est faible, il est possible d'ajouter encore d'autres chambres de pression de serrage afin d'augmenter l'effort de serrage. En variante, et par exemple dans le cas où on ne dispose ou on ne désire utiliser qu'une seule pression d'air, il est aussi possible de concevoir le dispositif avec un nombre de chambres de pression de desserrage plus élevé que le nombre de chambre de pression de serrage, la différence des forces exercées par les chambres de pression correspondant à la différence des forces exercées par les ressorts. Pour un effet semblable, et dans le cas où la force exercée par la deuxième pression d'air sur la face 511 correspond à la différence des forces exercées par les ressorts, il suffirait de ne pas alimenter le logement 70 par la première pression pour permettre d'alimenter séparément chacun des circuits par une même pression d'air servant au serrage ou au desserrage.

La disposition multi-étages des chambres de pression de serrage et des chambres de pression de desserrage, chaque jeu de chambres étant alimenté en parallèle par la pression d'air correspondante, permet une diminution du diamètre total de la broche, respectivement à l'augmentation du diamètre du passage 50 de la barre. Une telle disposition compacte limite l'inertie de la broche.

Il est inévitable qu'aux embouts d'entrée 90 et 91, une légère force radiale est exercée sur les coussinets d'étanchéité 21, provoquée par la pression de l'air comprimé sur les couronnes radiales des raccords 94. Pour éviter une charge unilatérale et par conséquent une excentricité des coussinets, il est prévu pour chaque embout d'entrée au moins un raccord 94 supplémentaire, afin que les forces radiales se neutralisent. Les raccords supplémentaires sont obturés avec des bouchons de fermeture 92.

Une pluralité de joints toriques 93 sont disposés aux endroits adéquats afin de fermer les conduits 902, 903, 912, 913 et de limiter les pertes de pression d'air.

Le dispositif d'alimentation d'air sous pression a été décrit avec deux coussinets 21, un pour chaque embout 90 et 91. Il est évidemment possible de n'avoir qu'un seul coussinet 21, muni des deux canalisations 900 et 910 ainsi que des deux chambres de distribution 901 et 911.

La broche telle que décrite est actionnée uniquement par des moyens pneumatiques pour le serrage ou le desserrage de la pince 6. En variante, il serait aussi possible de l'actionner par les moyens pneumatiques décrits pour le serrage de la pince 6 et par des moyens mécaniques, par exemple à cames, pour son desserrage. Une telle variante, tout en conservant l'avantage de garder la pièce ou la barre à usiner serrée dans la pince en cas de disparition de la pression d'air, possède l'avantage supplémentaire de pouvoir permettre le desserrage volontaire de la pièce ou de la barre en cas de disparition de la pression d'air.

La description ci-dessus concerne une broche munie d'un passage longitudinal 50 pour une barre à usiner, destinée particulièrement à une décolleteuse. Dans ce cas un des avantages d'une broche munie d'un dispositif de serrage selon l'invention est qu'il n'est pas nécessaire d'arrêter la rotation de la broche, respectivement de la barre, pour l'actionnement de la pince 6 en fermeture ou en ouverture. Il est évident qu'il est aussi possible de construire une broche, munie d'un dispositif de serrage selon l'invention ne comprenant pas ce passage longitudinal, par exemple pour un tour automatique. De par la place qui devient alors disponible dans la partie centrale de la broche, celle-ci devient plus courte. Une machine-outil peut aussi comprendre plus d'une broche telle que décrite plus haut. Une broche telle que décrite peut facilement être installée sur une machine existante, permettant ainsi d'augmenter le diamètre des barres que peut accepter cette machine.

## Revendications

1. Méthode de serrage utilisée dans un dispositif de serrage d'une pièce ou d'une barre d'un matériau à usiner dans une pince (6) d'une broche (1) en rotation d'une machine-outil,
**caractérisée en ce qu'en vue d'obtenir une force de serrage** importante et ajustable, la force de serrage exercée par la pince (6) est obtenue par l'addition d'une première force axiale exercée par un premier élément à ressort (7) et d'une deuxième force axiale exercée par une première pression d'air sur une face d'au moins une paroi (810, 820, 830, 840, 850) disposée essentiellement perpendiculairement à l'axe longitudinal de ladite broche, lesdites première et deuxième forces axiales s'exerçant selon une première direction axiale parallèle à l'axe longitudinal de la broche.

2. **Méthode de serrage** selon la revendication 1, **caractérisée en ce que** le desserrage de la pince (6) est obtenu par une troisième force axiale exercée par une deuxième pression d'air sur une autre face d'au moins une paroi (810, 820, 830, 840, 850) disposée essentiellement perpendiculairement à l'axe longitudinal de ladite broche, ladite troisième force axiale s'exerçant selon une deuxième direction axiale parallèle à l'axe longitudinal de la broche, la deuxième direction axiale étant opposée à la première direction axiale.

3. **Méthode de serrage** selon la revendication 2, **caractérisée en ce qu'**une quatrième force exercée par un deuxième élément à ressort (62) s'exerçant selon ladite deuxième direction axiale contribue au desserrage de la pince (6).

4. Dispositif de serrage fonctionnant selon la méthode de serrage de l'une des revendications précédentes **et comportant un corps de broche entraîné en rotation à l'intérieur d'un support de broche, caractérisé en ce qu'**il comprend un tube de poussée (5) disposé coaxialement à l'intérieur du corps de broche (3) et apte à coulisser axialement relativement audit corps de broche, le déplacement axial dudit tube de poussée commandant le serrage ou le desserrage de la pince, et un tube de réglage (4) disposé coaxialement entre une portion arrière du corps de broche (3) et une portion arrière du tube de poussée (5), ledit tube de réglage étant fixé axialement, un logement (70) pour ledit premier élément à ressort (7) étant aménagé entre ledit tube de réglage (4) et ledit tube de poussée (5) étant limité axialement d'un côté par une face (800) en forme de couronne circulaire d'une paroi (80) fixée au tube de réglage (4) et de l'autre côté par une face (510) en forme de couronne circulaire d'un épaulement (51) fixé au tube de poussée, ladite première force exercée par ledit premier élément à ressort (7) tendant à écarter les deux dites faces (800, 510), respectivement à déplacer le tube de poussée (5) selon ladite première direction axiale, au moins une chambre de pression de serrage étant aménagée entre au moins une paroi (81, 82, 83, 84, 85) fixée au tube de réglage (4) et au moins une paroi (810, 820, 830, 840, 850) fixée au tube de poussée (5), ladite ou lesdites chambres de pression de serrage étant alimentées par ladite première pression d'air.

5. Dispositif selon la revendication 4, **caractérisé en ce que** le logement (70) dudit premier élément à ressort (7) est aussi alimenté par ladite première pression d'air, pour servir de chambre supplémentaire de pression de serrage.

6. Dispositif selon la revendication 4 ou 5, **caractérisé en ce qu'**au moins une chambre de pression de desserrage est aménagée sur les autres faces des parois (80, 81, 82, 83, 84) fixées au tube de réglage (4) et les autres faces des parois (810, 820, 830, 840, 850) fixées au tube de poussée, ladite ou lesdites chambres de pression de desserrage étant alimentées par ladite deuxième pression d'air.

7. Dispositif selon la revendication 6, **caractérisé en ce qu'**un logement situé sur l'autre face (511) de l'épaulement (51) est aussi alimenté par ladite deuxième pression d'air, pour servir de chambre supplémentaire de pression de desserrage.

8. Dispositif selon l'une des revendications 4 à 7, **caractérisé en ce que** la première pression d'air est introduite par un embout (90) alimentant une canalisation (900) traversant le support de broche (2) puis un coussinet (21) muni d'une chambre de distribution (901) alimentant au moins un trou (32) traversant radialement le corps de broche (3) et débouchant dans un conduit (902) aménagé coaxialement entre le corps de broche (3) et le tube de réglage (4) ledit conduit alimentant ladite ou lesdites chambres de pression de serrage aménagée entre au moins une paroi (81, 82, 83, 84, 85) fixée au tube de réglage (4) et au moins une paroi (810, 820, 830, 840, 850) fixée au tube de poussée (5).

9. Dispositif selon la revendication 8, **caractérisé en ce que** ledit conduit (902) alimente aussi le logement (70) dudit premier élément à ressort (7)

10. Dispositif selon l'une des revendications 4 à 9, **caractérisé en ce que** la deuxième pression d'air est introduite par un embout (91) alimentant une canalisation (910) traversant le support de broche (2) puis un coussinet (21) muni d'une chambre de distribution (911) alimentant au moins un trou (33) traversant radialement le corps de broche (3) et débouchant dans un conduit (912) aménagé coaxialement entre le tube de réglage (4) et le tube de poussée (5) ledit conduit alimentant ladite ou lesdites chambres de pression de desserrage aménagée entre au moins une paroi (80, 81, 82, 83, 84) fixée au tube de réglage (4) et au moins une paroi (810, 820, 830, 840, 850) fixée au tube de poussée (5).

11. Dispositif selon la revendication 10, **caractérisé en ce que** ledit conduit (912) alimente aussi un logement situé sur l'autre face (511) de l'épaulement (51).

12. Dispositif selon l'une des revendications 4 à 11, **caractérisé en ce que** la première force axiale exercée par ledit premier élément à ressort (7) est plus grande que ladite quatrième force exercée par ledit deuxième élément à ressort (62).

13. Dispositif selon l'une des revendications 8 à 12, **caractérisé en ce que** le nombre de chambres de pression de serrage aménagées entre les parois (81, 82, 83, 84, 85) fixées au tube de réglage (4) et les parois (810, 820, 830, 840, 850) fixées au tube de poussée (5) et le nombre de chambres de pression de desserrag aménagées entre les parois (80, 81, 82, 83, 84) fixées au tube de réglage (4) et les parois (810, 820, 830, 840, 850) fixées au tube de poussée (5) sont variables, notamment pour adapter le dispositif à la pression d'air à disposition afin d'atteindre des forces de serrage et de desserrage suffisantes.

14. Dispositif selon l'une des revendications 8 à 13, **caractérisé en ce que** le conduit (902) de la première pression d'air et le conduit (912) de la deuxième pression d'air sont chacun munis d'au moins deux raccords (94), répartis autour du coussinet de manière symétrique, afin d'égaliser les forces radiales effectuées par l'air comprimé sur le coussinet.

15. Broche (1) d'une machine outil munie d'une pince de serrage (6) d'une pièce ou d'une barre à usiner, **caractérisée en ce qu'**elle comprend un dispositif de serrage selon l'une des revendications 4 à 14.

16. Broche selon la revendication 15, **caractérisée en ce qu'**elle comprend un percement longitudinal (50) pour le passage d'une barre à usiner.

17. Machine-outil **caractérisée en ce qu'**elle est équipée d'au moins une broche comprenant un dispositif de serrage selon l'une des revendications 4 à 14.

## Claims

1. Method for holding used in a device for holding a workpiece or a bar of a material to be machined in a chuck (6) of a rotating spindle (1) of a machine tool,
**characterised in that**, with a view to obtaining a great and adjustable gripping force, the gripping force exerted by the chuck (6) is obtained by the addition of a first axial force exerted by a first spring element (7) and of a second axial force exerted by a first air pressure on a face of at least one wall (810, 820, 830, 840, 850) disposed substantially perpendicular to the longitudinal axis of said spindle, said first and second axial forces being exerted along a first axial direction parallel to the longitudinal axis of the spindle.

2. Method for holding according to claim 1, **characterised in that** the loosening of the chuck (6) is obtained by a third axial force exerted by a second air pressure on another face of at least one wall (810, 820, 830, 840, 850) disposed substantially perpendicular to the longitudinal axis of said spindle, said third axial force being exerted along a second axial direction parallel to the longitudinal axis of the spindle, the second axial direction being opposite to the first axial direction.

3. Method for holding according to claim 2, **characterised in that** a fourth force exerted by a second spring element (62) being exerted along said second axial direction contributes to the loosening of the chuck (6).

4. Device for holding operating according to the method for holding of one of the preceding claims and comprising a spindle body driven in rotation within a spindle support, **characterised in that** it comprises a thrust tube (5) disposed coaxially within the spindle body (3) and capable of sliding axially relative to said spindle body, the axial movement of said thrust tube controlling the tightening or the loosening of the chuck, and a regulating tube (4) disposed coaxially between a rear portion of the spindle body (3) and a rear portion of the thrust tube (5), said regulating tube being fixed axially, a socket (70) for said first spring element (7) being made between said regulating tube (4) and said thrust tube (5) being bounded axially on one side by an annulus-shaped face (800) of a wall (80) fastened to the regulating tube (4), and on the other side by an annulus-shaped face (510) of a shoulder (51) fastened to the thrust tube, said first force exerted by said first spring element (7) tending to move the two said faces (800, 510) apart, hence to move the thrust tube (5) along said first axial direction, at least one tightening-pressure chamber being made between at least one wall (81, 82, 83, 84, 85) fastened to the regulating tube (4) and at least one wall (810, 820, 830, 840, 850) fastened to the thrust tube (5), said tightening-pressure chamber or chambers being fed by said first air pressure.

5. Device according to claim 4, **characterised in that** the socket (70) of said first spring element (7) is also fed by said first air pressure, to serve as an additional tightening-pressure chamber.

6. Device according to claim 4 or 5, **characterised in that** at least one loosening-pressure chamber is made on the other faces of the walls (80, 81, 82, 83, 84) fastened to the regulating tube (4) and the other faces of the walls (810, 820, 830, 840, 850) fastened to the thrust tube, said loosening-pressure chamber or chambers being fed by said second air pressure.

7. Device according to claim 6, **characterised in that** a socket situated on the other face (511) of the shoulder (51) is also fed by said second air pressure, to serve as an additional loosening-pressure chamber.

8. Device according to one of the claims 4 to 7, **characterised in that** the first air pressure is introduced through a nozzle (90) feeding a pipe (900) traversing the spindle support (2), then a bearing (21) provided with a distribution chamber (901) feeding at least one hole (32) radially traversing the spindle body (3) and opening out in a duct (902) made coaxially between the spindle body (3) and the regulating tube (4), said duct feeding said tightening-pressure chamber or chambers made between at least one wall (81, 82, 83, 84, 85) fastened to the regulating tube (4) and at least one wall (810, 820, 830, 840, 850) fastened to the thrust tube (5).

9. Device according to claim 8, **characterised in that** said duct (902) also feeds the socket (70) of said first spring element (7).

10. Device according to one of the claims 4 to 9, **characterised in that** the second air pressure is introduced through a nozzle (91) feeding a pipe (910) traversing the spindle support (2), then a bearing (21) provided with a distribution chamber (911) feeding at least one hole (33) radially traversing the spindle body (3) and opening out in a duct (912) made coaxially between the regulating tube (4) and the thrust tube (5), said duct feeding said loosening-pressure chamber or chambers made between at least one wall (80, 81, 82, 83, 84) fastened to the regulating tube (4) and at least one wall (810, 820, 830, 840, 850) fastened to the thrust tube (5).

11. Device according to claim 10, **characterised in that** said duct (912) also feeds a socket situated on the other face (511) of the shoulder (51).

12. Device according to one of the claims 4 to 11, **characterised in that** the first axial force exerted by said first spring element (7) is greater than said fourth force exerted by said second spring element (62).

13. Device according to one of the claims 8 to 12, **characterised in that** the number of tightening-pressure chambers made between the walls (81, 82, 83, 84, 85) fastened to the regulating tube (4) and the walls (810, 820, 830, 840, 850) fastened to the thrust tube (5) and the number of loosening-pressure chambers made between the walls (80, 81, 82, 83, 84) fastened to the regulating tube (4) and the walls (810, 820, 830, 840, 850) fastened to the thrust tube (5) are variable, especially for adapting the device to the available air pressure in order to attain sufficient tightening and loosening forces.

14. Device according to one of the claims 8 to 13, **characterised in that** the duct (902) of the first air pressure and the duct (912) of the second air pressure are each provided with at least two couplings (94), distributed symmetrically about the bearing, in order to equalize the radial forces carried out by the compressed air on the bearing.

15. Spindle (1) of a machine tool provided with a gripping chuck (6) for a workpiece or a bar to be machined, **characterised in that** it includes a holding device according to one of the claims 4 to 14.

16. Spindle according to claim 15, **characterised in that** it includes a longitudinal bore (50) for the passage of a bar to be machined.

17. Machine tool **characterised in that** it is equipped with at least one spindle including a holding device according to one of the claims 4 to 14.

## Patentansprüche

1. Verfahren zum Spannen, angewandt in einer Spannvorrichtung für ein Werkstück oder eine Materialstange, das beziehungsweise die in einer rotierenden Zange (6) einer Spindel (1) einer Werkzeugmaschine zu bearbeiten ist,
**dadurch gekennzeichnet, dass** zwecks Erreichens einer grossen und einstellbaren Spannkraft die durch die Zange (6) ausgeübte Spannkraft erreicht wird durch die Addition einer ersten Axialkraft, die durch ein erstes Federelement (7) ausgeübt wird und einer zweiten Axialkraft, die durch einen ersten Luftdruck auf eine Fläche mindestens einer Wand (810, 820, 830, 840, 850) ausgeübt wird, die im Wesentlichen rechtwinklig zur Längsachse der genannten Spindel angeordnet ist, wobei die genannten ersten und zweiten Axialkräfte in einer ersten axialen Richtung ausgeübt werden, die parallel zur Längsachse der Spindel ist.

2. Verfahren zum Spannen nach Anspruch 1, **dadurch gekennzeichnet, dass** das Lösen der Zange (6) erreicht wird durch eine dritte Axialkraft, die durch einen zweiten Luftdruck auf eine andere Fläche mindestens einer Wand (810, 820, 830, 840, 850) ausgeübt wird, die im Wesentlichen rechtwinklig zur Längsachse der genannten Spindel angeordnet ist, wobei die genannte dritte Axialkraft in einer zweiten axialen Richtung parallel zur Längsachse der Spindel ausgeübt wird, wobei die zweite axiale Richtung entgegengesetzt zur ersten axialen Richtung ist.

3. Verfahren zum Spannen nach Anspruch 2, **dadurch gekennzeichnet, dass** eine vierte, durch ein zweites Federelement (62) ausgeübte Kraft, die in der genannten zweiten axialen Richtung ausgeübt wird, zum Lösen der Zange (6) beiträgt.

4. Spannvorrichtung funktionierend nach dem Verfahren zum Spannen nach einem der vorangehenden Ansprüche und enthaltend einen Spindelkörper, der im Inneren eines Spindelträgers rotierend angetrieben ist, **dadurch gekennzeichnet, dass** sie ein Druckrohr (5) enthält, das koaxial im Inneren des Spindelkörpers (3) angeordnet und fähig ist, relativ zum genannten Spindelkörper axial zu gleiten, wobei die axiale Verschiebung des genannten Druckrohrs das Spannen oder das Lösen der Zange steuert, und ein Einstellrohr (4), das koaxial zwischen einem hinteren Teil des Spindelkörpers (3) und einem hinteren Teil des Druckrohrs (5) angeordnet ist, wobei das genannte Einstellrohr axial fixiert ist, eine Aufnahme (70) für das genannte erste Federelement (7), die zwischen dem genannten Einstellrohr (4) und dem genannten Druckrohr (5) eingebaut und auf einer Seite durch eine kreisringförmige Fläche (800) einer am Einstellrohr (4) befestigten Wand (80) und auf der anderen Seite durch eine kreisringförmige Fläche (510) einer am Druckrohr befestigten Schulter (51) axial begrenzt ist, wobei die genannte, durch das genannte erste Federelement (7) ausgeübte erste Kraft dazu tendiert, die zwei genannten Flächen (800, 510) auseinander zu drängen, beziehungsweise das Druckrohr (5) in der genannten ersten axialen Richtung zu verschieben, mindestens eine Spanndruckkammer, die zwischen mindestens einer am Einstellrohr (4) befestigten Wand (81, 82, 83, 84, 85) und mindestens einer am Druckrohr (5) befestigten Wand (810, 820, 830, 840, 850) eingebaut ist, wobei die genannte oder die genannten Spanndruckkammern durch den genannten ersten Luftdruck gespiesen werden.

5. Vorrichtung nach Anspruch 4, **dadurch gekennzeichnet, dass** die Aufnahme (70) des genannten ersten Federelements (7) auch durch den genannten ersten Luftdruck gespiesen wird, um als zusätzliche Spanndruckkammer zu dienen.

6. Vorrichtung nach Anspruch 4 oder 5, **dadurch gekennzeichnet, dass** mindestens eine Lösedruckkammer auf den anderen Flächen der am Einstellrohr (4) befestigten Wände (80, 81, 82, 83, 84) und den anderen Flächen der am Druckrohr befestigten Wände (810, 820, 830, 840, 850) eingebaut ist, wobei die genannte oder die genannten Lösedruckkammern durch den genannten zweiten Luftdruck gespiesen werden.

7. Vorrichtung nach Anspruch 6, **dadurch gekennzeichnet, dass** eine auf der anderen Fläche (511) der Schulter (51) gelegene Aufnahme auch durch den genannten zweiten Luftdruck gespiesen wird, um als zusätzliche Lösedruckkammer zu dienen.

8. Vorrichtung nach einem der Ansprüche 4 bis 7, **dadurch gekennzeichnet, dass** der erste Luftdruck durch ein Anschlussstück (90) zugeführt wird, das eine den Spindelträger (2) durchquerende Leitung (900) speist, dann eine Buchse (21), die mit einer Verteilkammer (901) ausgerüstet ist, die mindestens ein Loch (32) speist, das den Spindelkörper (3) radial durchquert und in einen Kanal (902) mündet, der koaxial zwischen dem Spindelkörper (3) und dem Einstellrohr (4) eingebaut ist, wobei der genannte Kanal die genannte oder die genannten Spanndruckkammern speist, die zwischen mindestens einer am Einstellrohr (4) befestigten Wand (81, 82, 83, 84, 85) und mindestens einer am Druckrohr (5) befestigten Wand (810, 820, 830, 840, 850) eingebaut sind.

9. Vorrichtung nach Anspruch 8, **dadurch gekennzeichnet, dass** der genannte Kanal (902) auch die Aufnahme (70) des genannten ersten Federelements (7) speist.

10. Vorrichtung nach einem der Ansprüche 4 bis 9, **dadurch gekennzeichnet, dass** der zweite Luftdruck durch ein Anschlussstück (91) zugeführt wird, das eine den Spindelträger (2) durchquerende Leitung (910) speist, dann eine Buchse (21), die mit einer Verteilkammer (911) ausgerüstet ist, die mindestens ein Loch (33) speist, das den Spindelkörper (3) radial durchquert und in einen Kanal (912) mündet, der koaxial zwischen dem Einstellrohr (4) und dem Druckrohr (5) eingebaut ist, wobei der genannte Kanal die genannte oder die genannten Lösedruckkammern speist, die zwischen mindestens einer am Einstellrohr (4) befestigten Wand (80, 81, 82, 83, 84) und mindestens einer am Druckrohr (5) befestigten Wand (810, 820, 830, 840, 850) eingebaut sind.

11. Vorrichtung nach Anspruch 10, **dadurch gekennzeichnet, dass** der genannte Kanal (912) auch eine auf der anderen Fläche (511) der Schulter (51) gelegene Aufnahme speist.

12. Vorrichtung nach einem der Ansprüche 4 bis 11, **dadurch gekennzeichnet, dass** die erste, durch das genannte erste Federelement (7) ausgeübte Axialkraft grösser ist, als die genannte vierte, durch das genannte zweite Federelement (62) ausgeübte Kraft.

13. Vorrichtung nach einem der Ansprüche 8 bis 12, **dadurch gekennzeichnet, dass** die Zahl der Spanndruckkammern, die zwischen den am Einstellrohr (4) befestigten Wänden (81, 82, 83, 84, 85) und den am Druckrohr (5) befestigten Wänden (810, 820, 830, 840, 850) eingebaut sind und die Zahl der Lösedruckkammem, die zwischen den am Einstellrohr (4) befestigten Wänden (80, 81, 82, 83, 84) und den am Druckrohr (5) befestigten Wänden (810, 820, 830, 840, 850) eingebaut sind, variabel sind, insbesondere zum Anpassen der Vorrichtung an den zur Verfügung stehenden Luftdruck, um ausreichende Kräfte zum Spannen und Lösen zu erreichen.

14. Vorrichtung nach einem der Ansprüche 8 bis 13, **dadurch gekennzeichnet, dass** der Kanal (902) für den ersten Luftdruck und der Kanal (912) für den zweiten Luftdruck jeder mit mindestens zwei Muffen (94) ausgerüstet sind, die symmetrisch um die Buchse verteilt sind, um die durch die Druckluft auf die Buchse ausgeübten radialen Kräfte symmetrisch zu verteilen.

15. Spindel (1) einer Werkzeugmaschine, ausgerüstet mit einer Spannzange (6) für ein zu bearbeitendes Werkstück oder eine Stange, **dadurch gekennzeichnet, dass** sie eine Spannvorrichtung nach einem der Ansprüche 4 bis 14 enthält.

16. Spindel nach Anspruch 15, **dadurch gekennzeichnet, dass** sie eine Längsöffnung (50) für den Durchgang einer zu bearbeitenden Stange hat.

17. Werkzeugmaschine, **dadurch gekennzeichnet, dass** sie mit mindestens einer Spindel ausgerüstet ist, die eine Spannvorrichtung nach einem der Ansprüche 4 bis 14 enthält.
